# EUROPEAN PATENT APPLICATION

(11) **EP 4 044 733 A1**
(43) Date of publication of application: **17.08.2022**
(21) Application number: 19948514.5
(22) Date of filing: 09.10.2019
(51) Int. Cl.: H04W 72/12

(54) **TERMINAL AND WIRELESS COMMUNICATION METHOD**

(71) Applicant: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/039914
(87) International publication number: WO 2021/070307

(57) **Abstract**

An aspect of a terminal according to the present disclosure includes: a reception section that receives information regarding a configured grant configuration; and a control section that, when a multi configured grant configuration is configured, determines a configured grant configuration to be applied based on the number of repeats and a redundancy version corresponding to each configured grant configuration.

## Description

### Technical Field

The present disclosure relates to a terminal and a radio communication method in next-generation mobile communication systems.

### Background Art

In the universal mobile telecommunications system (UMTS) network, the specifications of long term evolution (LTE) have been drafted for the purpose of further increasing data rates, providing low delays, and so on (see Non Patent Literature 1). In addition, the specifications of LTE-Advanced (3rd generation partnership project (3GPP) Release (Rel.) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), New Radio (NR), or 3GPP Rel. 15 or later) are also being studied.

In the existing LTE system (for example, 3GPP Rel. 8 to 14), a user terminal (user equipment (UE)) controls reception of a downlink shared channel (for example, a physical downlink shared channel (PDSCH)) based on downlink control information (DCI, also referred to as DL assignment or the like) from a base station. Also, the user terminal controls transmission of an uplink shared channel (for example, a physical uplink shared channel (PUSCH)) based on DCI (also referred to as UL grant or the like).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

For future radio communication systems (for example, New Radio), dynamic grant-based transmission and configured grant-based transmission are under study for UL transmission. It is also considered that the UE supports configuration of one or multi configured grant or is allowed to configure one or multi configured grant in one cell (or carrier, partial bandwidth (BWP)).

However, when a multi configured grant is configured, which configured grant the UE uses for UL transmission has not been studied yet. There is a problem that, if it is not specified that the configured grant-based transmission is performed at an appropriate transmission occasion, the communication throughput decreases.

Therefore, an object of the present disclosure is to provide a terminal and a radio communication method capable of appropriately performing configured grant-based transmission even when one or multi configured grant is configured.

### Solution to Problem

A terminal according to an aspect of the present disclosure includes: a reception section that receives information regarding a configured grant configuration; and a control section that, in a case where a multi configured grant configuration is configured, determines a configured grant configuration to be applied based on the number of repeats and a redundancy version corresponding to each configured grant configuration.

### Advantageous Effects of Invention

According to an aspect of the present disclosure, configured grant-based transmission can be appropriately performed even when one or multi configured grant is configured.

### Brief Description of Drawings

Fig. 1 is a diagram illustrating an example of a case where a multi configured grant is configured.
Fig. 2 is a diagram illustrating an example of a method of determining an initial transmission occasion.
Fig. 3 is a diagram illustrating an example of a case where a multi configured grant corresponding to different RV sequences is configured.
Fig. 4 is a diagram illustrating an example of a method of determining a configured grant.
Fig. 5 is a diagram illustrating another example of a method of determining a configured grant.
Fig. 6 is a diagram illustrating still another example of a method of determining a configured grant.
Fig. 7 is a diagram illustrating an example of an initial transmission occasion in a case where the same RV sequence corresponds to a multi configured grant.
Fig. 8 is a diagram illustrating an example of a schematic configuration of a radio communication system according to an embodiment.
Fig. 9 is a diagram illustrating an example of a configuration of a base station according to one embodiment.
Fig. 10 is a diagram illustrating an example of a configuration of user terminal according to one embodiment.
Fig. 11 is a diagram illustrating an example of a hardware configuration of the base station and the user terminal according to one embodiment.

### Description of Embodiments

### <Dynamic grant-based transmission and configured grant-based transmission (type 1, type 2)>

Dynamic grant-based transmission and configured grant-based transmission are being studied for UL transmission of NR.

Dynamic grant-based transmission is a method of performing UL transmission using an uplink shared channel (for example, (Physical Uplink Shared Channel (PUSCH)) based on a dynamic UL grant (dynamic grant).

The configured grant-based transmission is a method of performing UL transmission using an uplink shared channel (for example, PUSCH) based on the UL grant configured by the higher layer (for example, configured grant, may be referred to as configured UL grant or the like). In the configured grant-based transmission, UL resources are already assigned to the UE, and the UE can voluntarily perform UL transmission using the configured resources, and thus low delay communication can be expected to be realized.

Dynamic grant-based transmission may be referred to as dynamic grant-based PUSCH, UL transmission with dynamic grant, PUSCH with dynamic grant, UL Transmission with UL grant, UL grant-based transmission, UL transmission scheduled (of which transmission resource is configured) by dynamic grant, or the like.

The configured grant-based transmission may be referred to as configured grant-based PUSCH, UL transmission with configured grant, PUSCH with configured grant, UL Transmission without UL grant, UL grant-free transmission, UL transmission scheduled (of which transmission resource is configured) by configured grant, or the like.

Furthermore, the configured grant-based transmission may be defined as one type of UL Semi-Persistent Scheduling (SPS). In the present disclosure, "configured grant" may be read as "SPS", "SPS/configured grant", and the like.

Several types (type 1, type 2, or the like) are being studied for configured grant-based transmission.

In configured grant type 1 transmission, the parameters used for configured grant-based transmission (which may also be referred to as configured grant-based transmission parameters, configured grant parameters, or the like) are configured in the UE using only higher layer signaling.

In configured grant type 2 transmission, configured grant parameters are configured in the UE by higher layer signaling. In the configured grant type 2 transmission, notification of at least a part of the configured grant parameters may be provided to the UE by physical layer signaling (for example, activation downlink control information (DCI) described later).

Here, the higher layer signaling may be, for example, any of RRC (Radio Resource Control) signaling, MAC (Medium Access Control) signaling, broadcast information, and the like, or a combination thereof.

For the MAC signaling, for example, a MAC control element (MAC CE), a MAC PDU (Protocol Data Unit), or the like may be used. The broadcast information may be, for example, a master information block (MIB), a system information block (SIB), a minimum system information (Remaining Minimum System Information (RMSI)), other system information (OSI), or the like.

The configured grant parameter may be configured in the UE using a ConfiguredGrantConfig information element of RRC. The configured grant parameters may include information specifying a configured grant resource, for example. The configured grant parameter may include information on, for example, an index of the configured grant, a time offset, periodicity, the number of repeated transmissions of a transport block (TB) (the number of repeated transmissions may be expressed as K), a redundancy version (RV) sequence used in the repeated transmissions, the above-mentioned timer, and the like.

Here, each of the periodicity and the time offset may be represented in units of symbols, slots, subframes, frames, or the like. The periodicity may be indicated by, for example, a predetermined number of symbols. The time offset may be indicated by an offset with respect to a timing of a predetermined index (such as slot number = 0 and/or system frame number = 0), for example. The number of repeated transmissions may be an arbitrary integer, for example, 1, 2, 4, 8, or the like. When the number of repeated transmissions is n (>0), the UE may perform configured grant-based PUSCH transmission of a predetermined TB by using n times of transmission occasions.

The UE may determine that one or more configured grants have been triggered if the configured grant type 1 transmission is set. The UE may perform PUSCH transmission by using configured resource for configured grant-based transmission (which may also be referred to as a configured grant resource, a transmission occasion, or the like). Note that, even when the configured grant-based transmission is configured, the UE may skip the configured grant-based transmission when there is no data in the transmission buffer.

When the configured grant type 2 transmission is configured and notification of a predetermined activation signal is provided, the UE may determine that one or a plurality of configured grants have been triggered (or activated). The predetermined activation signal (DCI for activation) may be DCI (PDCCH) scrambled by a Cyclic Redundancy Check (CRC) with a predetermined identifier (for example, Configured Scheduling RNTI (CS-RNTI)). Note that the DCI may be used for control such as deactivation and retransmission of the configured grant.

The UE may determine whether to perform PUSCH transmission using the configured grant resource configured in the higher layer based on the predetermined activation signal. The UE may release (which may be referred to as deactivate or the like) the resource (PUSCH) corresponding to the configured grant based on the expiration (elapse of a predetermined time) of the DCI that deactivates the configured grant or a predetermined timer.

Note that, even when the configured grant-based transmission is activated (in an active state), the UE may skip the configured grant-based transmission when there is no data in the transmission buffer.

Note that each of the dynamic grant and the configured grant may be referred to as an actual UL grant. That is, the actual UL grant may be higher layer signaling (for example, ConfiguredGrantConfig information element of RRC), physical layer signaling (for example, the above-described predetermined activation signal), or a combination thereof.

By the way, a multi configured grant may be set in one cell in the UE, and the UE may be in a state where the multi configured grant is triggered (or activated) in a certain period.

However, when a multi configured grant is set, triggered, or activated, which configured grant the UE uses for UL transmission has not been studied yet. There is a problem that, if it is not specified that the configured grant-based transmission is performed at an appropriate transmission occasion, the communication throughput decreases.

Therefore, the present inventors of the present invention have conceived of a method of performing configured grant-based transmission at an appropriate transmission occasion even when a multi configured grant is configured.

Hereinafter, embodiments according to the present disclosure will be described in detail with reference to the drawings. Radio communication methods according to respective embodiments may be applied individually or in combination.

Hereinafter, "configured grant" and "configuration of configured grants" may be replaced with each other. "Determining a configured grant for performing configured grant-based transmission" may be simply referred to as "selecting a configured grant". Furthermore, "traffic", "data", "UL data", "PUSCH", and "transport block" may be replaced with one another.

### <Redundancy version>

In a case where transmission of a plurality of shared channels (for example, the PUSCHs) or PUSCH repeated transmission is performed, a predetermined redundancy version (RV) is applied to each PUSCH transmission.

In a case where repeated transmission of the PUSCH (or TB) is performed over a plurality of transmission occasions, the RV applied to the n-th transmission occasion of the TB may be determined based on a predetermined rule. For example, for PUSCH repeated transmission scheduled by a PDCCH (or DCI) that is cyclic redundancy check (CRC)-scrambled using a predetermined radio network temporary identifier (RNTI), the RV may be determined based on information notified by the DCI and an index of a transmission occasion.

The UE may determine the RV (which may be read as an RV index, an RV value, or the like) corresponding to the n-th repetition based on a value of a predetermined field (for example, an RV field) in the DCI for scheduling the repetition of the PUSCH. Note that, in the present disclosure, the n-th repetition may be read as the (n-1) th repetition (for example, the first repetition may be expressed as the 0-th repetition).

For example, the UE may determine the RV index to be applied to the first repetition based on a 2-bit RV field. For example, the value of the RV field being "00", "01", "10", and "11" may correspond to the RV index of the first repetition being "0", "1", "2", and "3", respectively.

For repeat of the PUSCH, only a specific RV sequence may be supported. The specific RV sequence may be an RV sequence (for example, an RV sequence {#0, #2, #3, #1}) including different RV indexes (not including the same RV index). Note that the RV sequence may include one or more RV indexes.

In addition, for repeat of the PUSCH, more than one RV sequences may be supported. The more than one RV sequence may include, for example, a first RV sequence {#0, #2, #3, #1}, a second RV sequence {#0, #3, #0, #3}, a third RV sequence {#0, #0, #0, #0}, and the like. The number of applied RV sequences may be set according to a transmission type.

For example, one RV sequence may be applied to dynamic-based PUSCH transmission in which the PUSCH is scheduled by the DCI, and a plurality of RV sequences may be applied to configured grant-based PUSCH transmission.

The UE may configure at least one of more than one RV sequences by higher layer signaling for PUSCH repeat. For example, in configured grant-based PUSCH transmission, at least one of RV sequences {#0, #2, #3, #1}, {#0, #3, #0, #3}, and {#0, #0, #0, #0} may be configured by higher layer signaling. The information regarding the RV sequence may be included in the information regarding the configuration of a configured grant (for example, ConfiguredGrantConfig).

In existing radio communication systems (for example, Rel. 15 and earlier), a configured grant for one cell (or carrier, BWP) is limited to one. On the other hand, in future radio communication systems (for example, Rel. 16 and later), it is considered that a multi configured grant is set for one BWP (or carrier, cell).

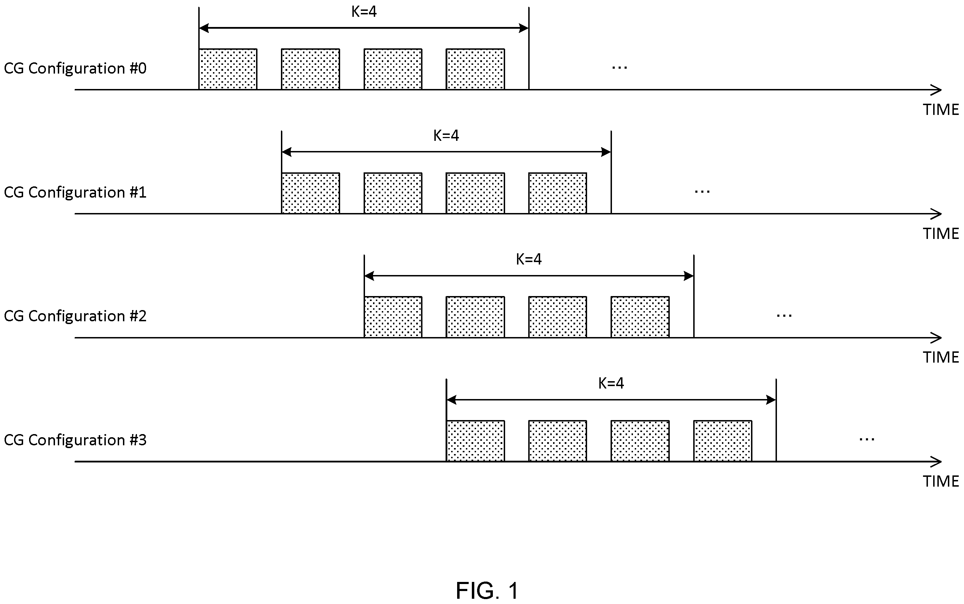

Fig. 1 illustrates an example of a case where a multi (in this case, four) configured grant is configured or activated in the UE. In such a case, it is an issue of how to control the UL transmission using the configured grant.

For example, it is an issue of which configured grant the UE applies to perform UL transmission. Alternatively, it is an issue of how the UE determines the location of the initial transmission (initial Tx) (for example, transmission occasion) of the repeated transmissions.

In a case where configuration of a multi configured grant is supported or allowed, the present inventors have studied at least one of determination of a configured grant base to be applied and timing of initial transmission of a transport block (alternatively, the position of the initial transmission), and have reached the present invention.

Hereinafter, embodiments according to the present disclosure will be described in detail with reference to the drawings. Note that the following first and second aspects may be used alone, or may be applied by combining at least two of them. In the following description, an uplink shared channel (for example, the PUSCH) is used as an example, but applicable signals/channels are not limited thereto. For example, the present embodiment may be applied by replacing the PUSCH with the PDSCH and replacing the transmission with the reception.

The following aspects will be described by exemplifying a configuration in which a configured grant is configured by higher layer signaling (for example, Type 1 configured grant). However, the applicable configuration is not limited thereto, and another configuration (for example, type 2 configured grant) may be applied.

### (First aspect)

In a first aspect, in a case where one or multi configured grant configuration (hereinafter, also referred to as configured grant) is configured, an example of a determination method of a timing for initial transmission of repeated transmissions (for example, the location of the transmission occasion) and a configured grant to be applied will be described.

If one or multi configured grant is configured, the UE may determine the timing of the initial transmission of a TB based on a first rule.

### <First rule>

The initial transmission of the TB initiated by the UE may be determined according to a configured RV sequence and a repeat factor K.

Information regarding the RV sequence (for example, repK-RV) and the repeat factor K (for example, RepK) may be included in a configured grant (for example, ConfiguredGrantConfig) configured for the UE in a higher layer. When a multi configured grant is configured, the RV sequence and the repeat factor K may be separately configured (for example, at least one of different RV sequences and different repetition factors K) for each configured grant.

In addition, each configured grant configured in a higher layer may include other information such as resource allocation, periodicity, and a configured grant timer. In a multi configured grant, some parameters may be set separately, and the remaining parameters may be set in common.

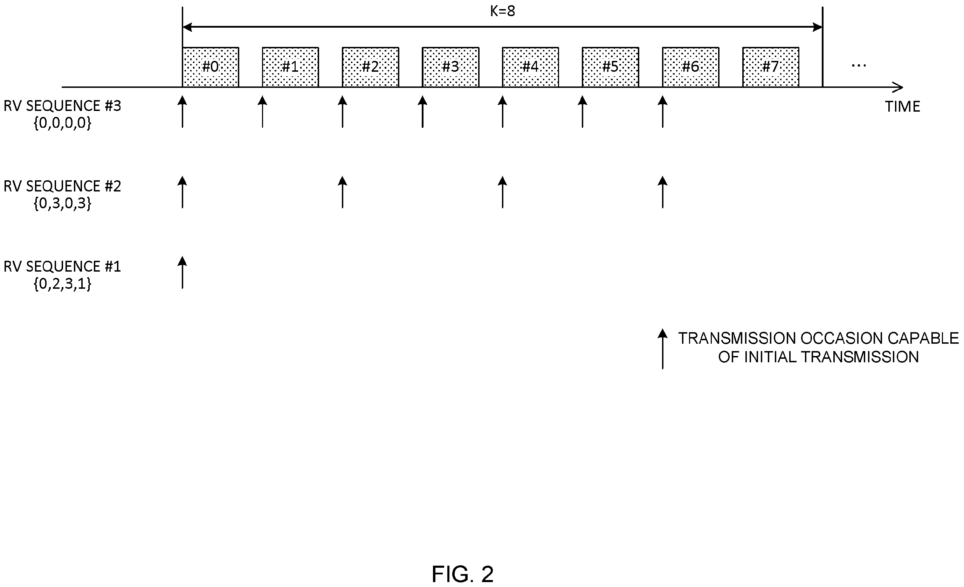

Fig. 2 is a diagram illustrating the first rule. Here, the UE determines a transmission timing (for example, the initial transmission occasion) at which the initial transmission of the TB is allowed based on each RV sequence and each repeat factor K. Note that Fig. 2 illustrates a case where the repeat factor K is 8 (k = 0 to 7), but the repeat factor is not limited thereto and may take another value (for example, K = 1, 2, 4, or 16, etc.).

When the first RV sequence {#0, #2, #3, #1} is configured, or in a configured grant in which the first RV sequence is configured, the initial transmission of the TB is started from the first transmission occasion of K repeats. Here, the initial transmission can be performed only from the first transmission occasion (k = 0) among the eight transmission occasions included in the range of the periodicity P.

When the second RV sequence {#0, #3, #0, #3} is configured, or in a configured grant in which the second RV sequence is configured, the initial transmission of the TB can be started from any transmission occasion associated with a predetermined RV index (for example, RV = 0) among the K repeats. Here, the initial transmission can be performed from at least one of the first (k = 0), third (k = 2), fifth (k = 4), and seventh (k = 6) transmission occasions among the eight transmission occasions included in the range of the periodicity P.

When the third RV sequence {#0, #0, #0, #0} is set, or in a configured grant in which the third RV sequence is configured, the initial transmission of the TB can be started from each transmission occasion (in a case of K = 1, 2, or 4) among the K repeats, or from a transmission occasion other than the last transmission occasion (in a case of K = 8) among the K repeats.

In this way, the initial transmission occasion may be a transmission occasion corresponding to a specific RV value. The specific RV value may be a self-decodable RV. The self-decodable RV may be an RV value (for example, RV = 0) including many bits related to system information (systematic bits). By transmitting at least a PUSCH to which the self-decodable RV value is applied, it is possible to increase the probability that decoding can be performed at a base station based on the PUSCH to which the RV is applied.

The first rule may be a rule applied when one configured grant is configured (for example, a method for determining the starting occasion in Rel. 15).

In addition, when different configured grants are configured or activated in a cell (or BWP), the UE may perform control such that the same PUSCH using the different configured grants is not simultaneously transmitted. That is, the UE may perform control to perform PUSCH transmission using one configured grant in a predetermined period (for example, a certain transmission occasion).

Accordingly, even when a multi configured grants is configured, it is possible to suppress overlapping of the same PUSCH using different configured grants in the time domain. As a result, it is possible to suppress an increase in the load of the transmission processing by the UE.

When a multi configured grant is configured, the UE may autonomously determine which configured grant to apply (UE implementation) or may determine based on a predetermined rule. The predetermined rule may be, for example, at least one of the number of transmissions of PUSCH that can be transmitted by the UE and the start timing.

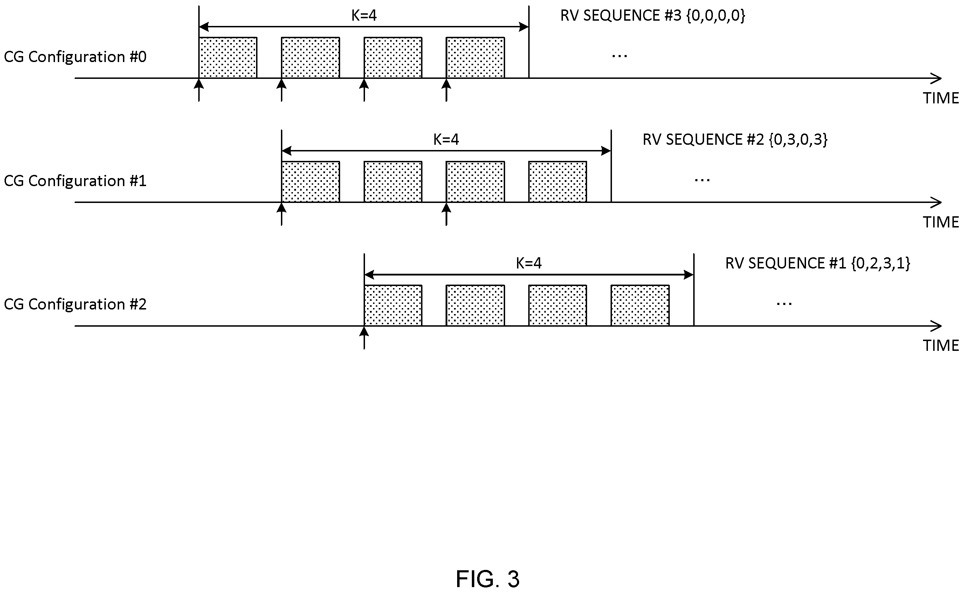

Fig. 3 illustrates an example of a case where a configured grant to be applied to UL transmission is determined based on the number of transmissions of the PUSCH that can be transmitted by the UE. Fig. 3 illustrates a case where the configured grants #0 to #2 are configured or activated.

In addition, Fig. 3 illustrates a case where the configured grant #0 is associated with a third RV sequence {#0, #0, #0, #0}, the configured grant #1 is associated with a second RV sequence {#0, #3, #0, #3}, and the configured grant #2 is associated with a first RV sequence {#0, #2, #3, #1}. In this case, the repeat factor K of each of the configured grants #0 to #2 is 4.

Note that the same RV sequence may be configured for each of the configured grants #0 to #2. In addition, a different repeat factor K may be configured for each of the configured grants #0 to #2. In addition, Fig. 3 illustrates a case where the transmission occasions corresponding to the configured grants #0 to #2 are configured to be shifted one by one, but the positions of the transmission occasions are not limited thereto.

When traffic of UL transmission (for example, PUSCH or UL-SCH) (also referred to as UL traffic) occurs, the UE may select a configured grant having the largest number of transmissions of the UL transmission. In a case where the number of transmissions is the same, a configured grant in which the UL transmission is started earlier (or transmission ends early.) may be selected.

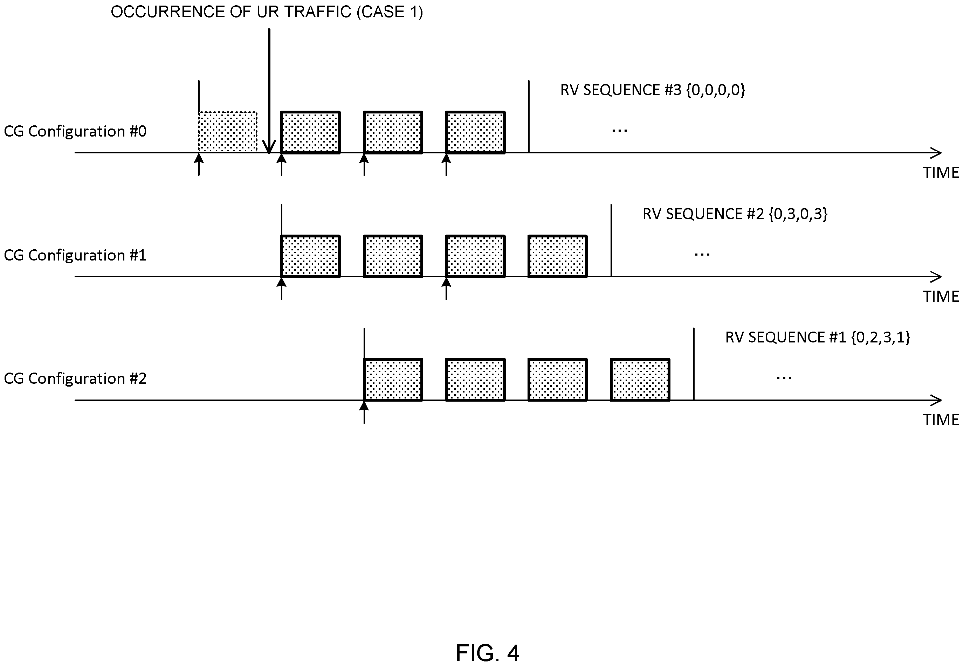

For example, it is assumed that the UL traffic occurs between the first and second transmission occasions of the configured grant #0 (or before the first transmission occasion of the configured grant #1) (case 1) (see Fig. 4). Considering the first rule, in the configured grant #0, the transmission can be started from the second transmission occasion, so that the UL transmission can be transmitted three times. In the configured grant #1, the transmission can be started from the first transmission occasion, so that the UL transmission can be transmitted four times. In the configured grant #2, the transmission can be started from the first transmission occasion, so that the UL transmission can be transmitted four times.

In this case, the UE may perform control to select the configured grant #1 having the largest number of transmissions and the earliest transmission start (or earliest transmission completion) and perform the actual UL transmission. As a result, when a multi configured grant is configured, it is possible to select a configured grant more suitable for UL transmission to perform the UL transmission, so that it is possible to improve the throughput of the UL transmission.

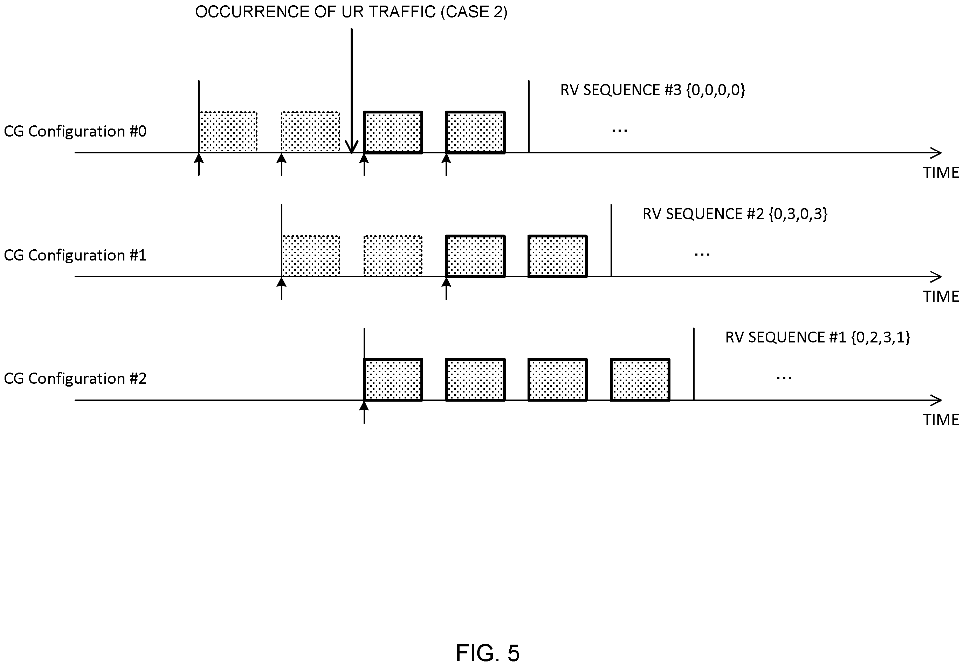

In addition, it is assumed that the UL traffic occurs between the second and third transmission occasions of the configured grant #0 (or between the first and second transmission occasions of the configured grant #1, before the first transmission occasion of the configured grant #2) (case 2) (see Fig. 5). Considering the first rule, in the configured grant #0, the transmission can be started from the third transmission occasion, so that the UL transmission can be transmitted two times. In the configured grant #1, the transmission can be started from the third transmission occasion, so that the UL transmission can be transmitted two times. In the configured grant #2, the transmission can be started from the first transmission occasion, so that the UL transmission can be transmitted four times.

In this case, the UE may perform control to select the configured grant #2 having the largest number of transmissions (and the early transmission timing) and perform the actual UL transmission.

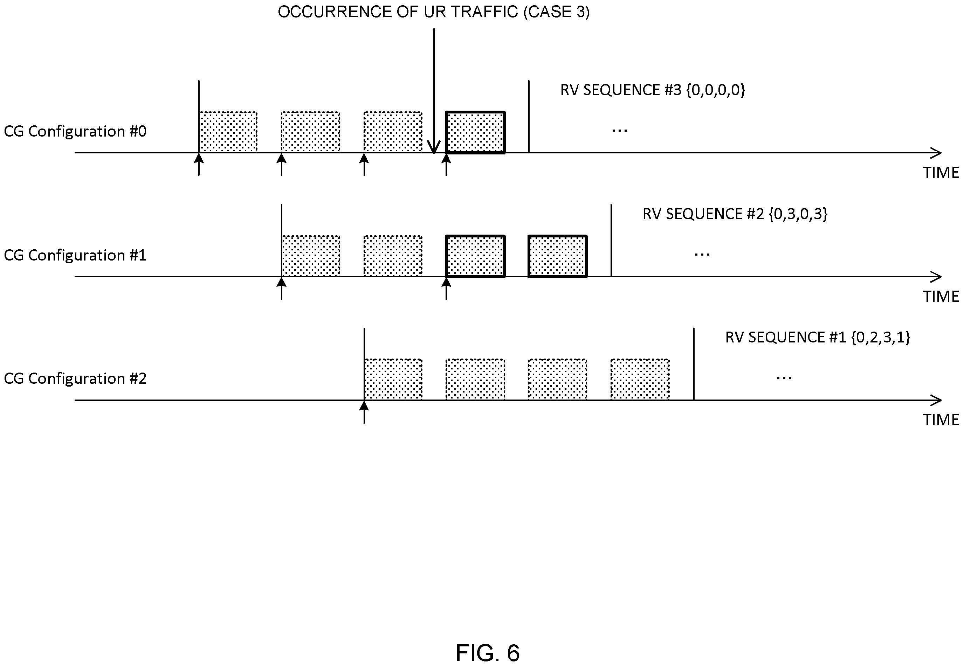

In addition, it is assumed that the UL traffic occurs between the third and fourth transmission occasions of the configured grant #0 (or between the second and third transmission occasions of the configured grant #1, and between the second and third transmission occasions of the configured grant #2) (case 3) (see Fig. 6). Considering the first rule, in the configured grant #0, the transmission can be started from the fourth transmission occasion, so that the UL transmission can be transmitted once. In the configured grant #1, the transmission can be started from the third transmission occasion, so that the UL transmission can be transmitted two times. In the configured grant #2, the transmission cannot be started from the second and subsequent transmission occasions, so that no UL transmission can be performed.

In this case, the UE may perform control to select the configured grant #1 having the largest number of transmissions and perform the actual UL transmission.

As described above, when a multi configured grant is configured, the configured grant to be applied and the transmission start timing can be appropriately determined considering the first rule (the RV sequence to be configured and the repeat factor K) and the number of transmissions after the UL traffic timing. It is also possible to suppress an increase in overhead (for example, RRC overhead) from the base station to the UE as compared with a case where the timing of the initial transmission or the configured grant to be applied is notified (for example, through higher layer signaling) from the base station to the UE.

Figs. 4 to 6 illustrate the case where the transmission is started from the first transmission occasion after the occurrence of the UL traffic. However, the transmission occasion arranged after the lapse of a predetermined period from the occurrence of the UL traffic may be set as the starting position. The predetermined period may be separately set for each UE. Thereby, the starting position of the configured grant can be controlled according to the capability of the UE.

In addition, Figs. 4 to 6 illustrate the case where the configured grant having the maximum number of transmissions (or transmission occasions) after occurrence of UL traffic is selected, but the present invention is not limited thereto. For example, when the number of transmissions in the UL transmission (or transmission occasions that can be used for the UL transmission) equal to or larger than a certain value can be secured, the UE may select a configured grant based on another parameter (for example, transmission start timing, transmission end timing, RV sequence type, the number of allocated resources, or the like).

### (Second aspect)

In a second aspect, a case where, when one or multi configured grant is configured, the timing of the initial transmission of the repeated transmissions (for example, the location of the transmission occasion) and the configured grant to be applied are determined based on a rule selected under a predetermined condition will be described.

When the one or multi configured grant is configured, the UE may determine at least one of the timing of the initial transmission of the repeated transmissions (for example, the location of the transmission occasion) and the configured grant to be applied, based on a rule selected under a predetermined condition. The UE may select one of the following rule A and rule B under a predetermined condition. Note that the contents and number of rules to be selected are not limited thereto.

### <Rule A>

The rule A may have a configuration of determining a transmission timing (for example, a transmission occasion) at which the initial transmission of the TB is allowed based on the RV sequence and the repeat factor K (for example, the first rule shown in the first aspect). Alternatively, the UE may determine the transmission timing at which the initial transmission of the TB is allowed based on the first rule and the number of transmissions after the UL traffic and the configured grant to be applied (for example, the first aspect). The first rule may be a rule applied when one configured grant is configured.

### <Rule B>

The rule B may have a configuration in which the transmission timing (for example, a transmission occasion) at which the initial transmission of the TB is allowed is limited to a predetermined transmission occasion. For example, the predetermined transmission occasion may be the first transmission occasion in each configured grant. That is, the UE may control to perform the initial transmission of the TB only from the first transmission occasion in the repeated transmission (or transmission occasion) corresponding to each configured grant.

The predetermined condition may be, for example, RV sequence to be configured (or also referred to as RV sequence type, RV sequence setting, RV sequence configuration, or RV sequence category) (option 2-1). Alternatively, the predetermined condition may be whether or not the parameter corresponding to each configured grant is configured to be the same (option 2-2).

### <Option 2-1>

Rule B may be applied when the RV sequence to be configured is a predetermined RV sequence, and the rule A may be applied in the other cases (when the RV sequence to be configured is another RV sequence). For example, the UE applies rule B when the RV sequence is the first RV sequence {#0, #2, #3, #1}. That is, in the case of the first RV sequence, since the transmission cannot be started from the middle of the repeated transmission (transmission occasion) even if the rule A (for example, the first rule) is applied, the transmission is started from the initial repeat (transmission occasion).

On the other hand, the UE applies the rule A when the RV sequence is the second RV sequence {#0, #3, #0, #3} or the third RV sequence {#0, #0, #0, #0}. That is, in the case of the second RV sequence or the third RV sequence, since the transmission can be started from the middle of the repeated transmission (transmission occasion), the rule A is applied.

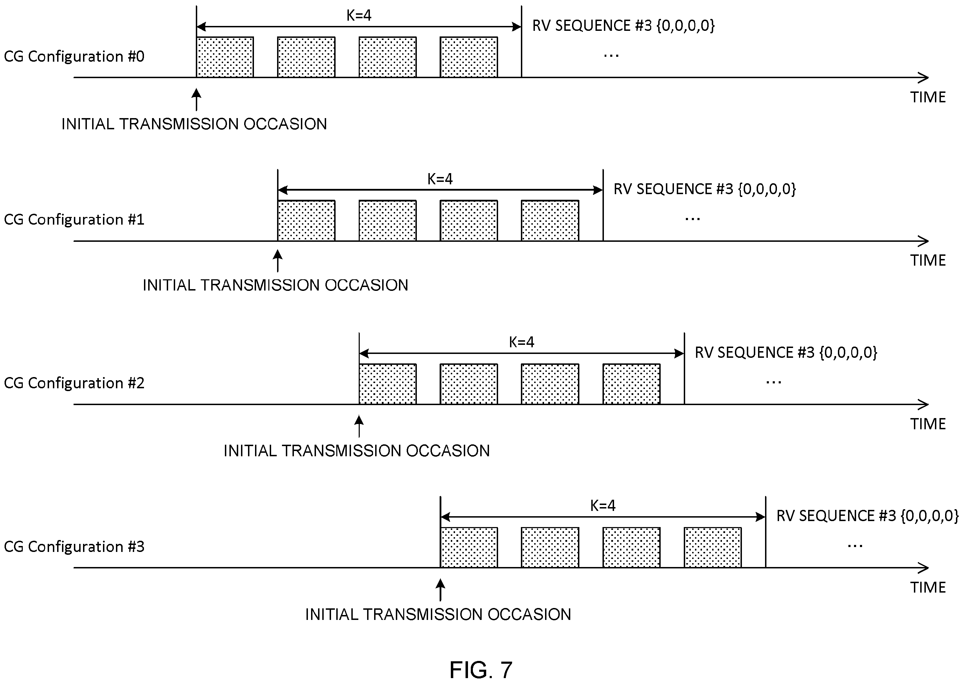

Alternatively, which one of the rule A and the rule B is applied may be selected according to whether the RV sequences corresponding to the configured grants are the same. For example, the UE applies the rule B if the RV sequences corresponding to the multi configured grant are the same (that is, one of {#0, #2, #3, #1}, {#0, #3, #0, #3}, or {#0, #0, #0, #0} is configured for the multi configured grants) (see Fig. 7).

Fig. 7 illustrates a case where the third RV sequence {#0, #0, #0, #0} is configured for each of the configured grants #0 to #3. In this case, in each configured grant, by setting the transmission occasion at which to start the initial transmission of the TB as the top transmission occasion, the transmission of the UL transmission can be performed K times regardless of the timing of occurrence of the UL traffic. In addition, even when any RV sequence is configured for each configured grant, UL transmission using at least the RV value 0 can be performed.

On the other hand, the UE may apply the rule A (for example, the first aspect) when different RV sequences correspond to the multi configured grant. As a result, even when a different RV sequence is configured for each configured grant, the configured grant to be applied and the transmission start timing can be appropriately selected.

### <Option 2-2>

Which one of the rule A and the rule B is applied may be selected according to whether the predetermined parameter corresponding to each configured grant base is the same. For example, if the same predetermined parameter corresponds to the multi configured grant (that is, the value or contents of the predetermined parameter are set to be the same for the multi configured grant), the UE applies the rule B.

In this case, in each configured grant, by setting the transmission occasion at which the initial transmission of the TB can be started as the top transmission occasion, the transmission of the UL transmission can be performed K times regardless of the timing of occurrence of the UL traffic.

In addition, when different predetermined parameters correspond to the multi configured grant, the UE applies the rule A (for example, the first aspect). As a result, even when the multi configured grant is configured, the configured grant to be applied and the transmission start timing can be appropriately selected.

The predetermined parameter may be at least one of transmission length (Tx length), the number of resource blocks (RBs) allocated for UL transmission, modulation and coding scheme (MCS), transport block size (TBS), repeat factor (K), and RV sequence. For example, the UE may apply the rule B if one or a combination of at least two of these parameters is set to the same value in each configured grant, and may apply the rule A otherwise.

In this manner, by determining the start timing (transmission occasion) of the initial transmission of the TB based on the parameter corresponding to each configured grant, it is possible to eliminate the necessity of notification using higher layer signaling to specify the initial transmission occasion.

### (Radio communication system)

Hereinafter, a configuration of a radio communication system according to one embodiment of the present disclosure will be described. In this radio communication system, communication is performed using any one of the radio communication methods according to the embodiments of the present disclosure or a combination thereof.

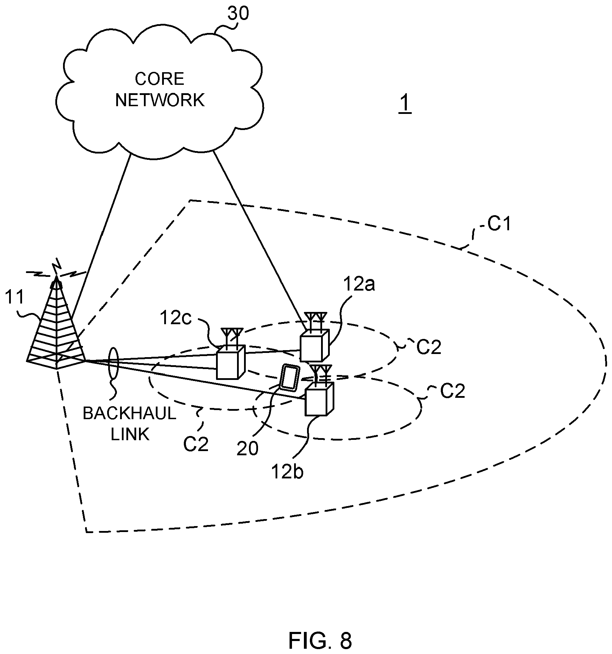

Fig. 8 is a diagram illustrating an example of a schematic configuration of a radio communication system according to an embodiment. A radio communication system 1 may be a system that implements communication using long term evolution (LTE), 5th generation mobile communication system New Radio (5G NR), and the like drafted as the specification by 3rd generation partnership project (3GPP).

Furthermore, the radio communication system 1 may support dual connectivity between a plurality of radio access technologies (RATs) (multi-RAT dual connectivity (MR-DC)). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in FR1, and the small cell C2 may be included in FR2. For example, FR1 may be a frequency band of 6 GHz or less (sub-6 GHz), and FR2 may be a frequency band higher than 24 GHz (above-24 GHz). Note that the frequency bands, definitions, and the like of FR1 and FR2 are not limited to these, and for example, FR1 may be a frequency band higher than FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a wireless manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminalspecific reference signals (UE-specific Reference Signals)".

### (Base Station)

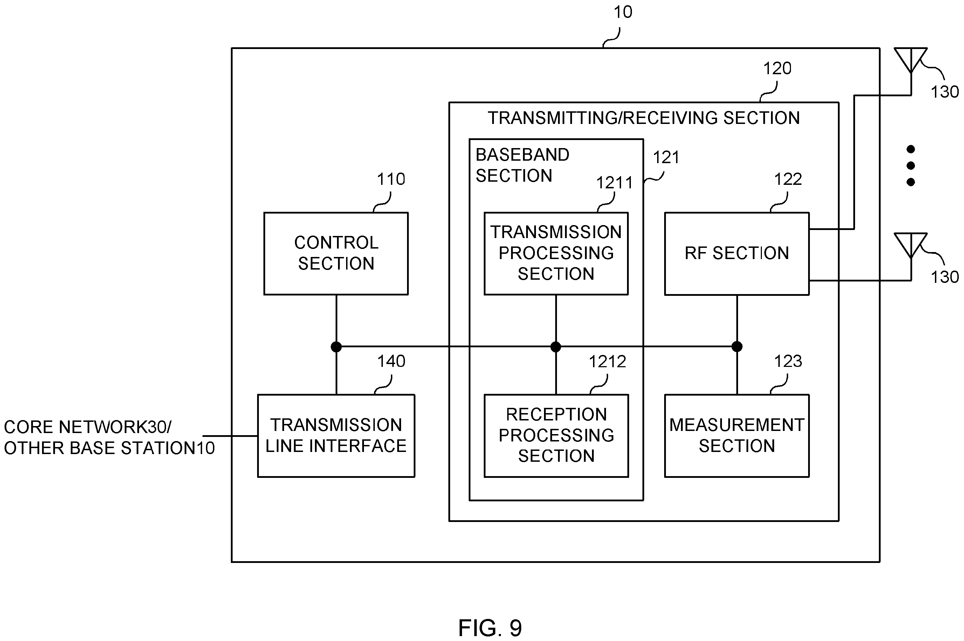

Fig. 9 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may transfer the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a base band circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmission section and a reception section. The transmission section may include the transmission processing section 1211 and the RF section 122. The reception section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a base band signal.

The transmitting/receiving section 120 (RF section 122) may perform modulation to a radio frequency band, filtering processing, amplification, and the like on the base band signal, and may transmit a signal in the radio frequency band via the transmission/reception antenna 130.

Meanwhile, the transmitting/receiving section 120 (RF section 122) may perform amplification, filtering processing, demodulation to a base band signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired base band signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, other base stations 10, and the like, and may acquire, transmit, and the like user data (user plane data), control plane data, and the like for the user terminal 20.

Note that the transmission section and the reception section of the base station 10 in the present disclosure may be constituted by at least one of the transmitting/receiving section 120, the transmission/reception antenna 130, and the transmission line interface 140.

The transmitting/receiving section 120 transmits information regarding one or multi configured grant configuration (for example, ConfiguredGrantConfig). The information regarding each configured grant configuration may include information such as the number of repeats (repeat factor K), redundancy version, and transmission occasion.

When a multi configured grant configuration is configured, the control section 110 may assume that the configured grant configuration applied in the UE is determined based on the number of repeats and the redundancy version corresponding to each configured grant configuration.

### (User Terminal)

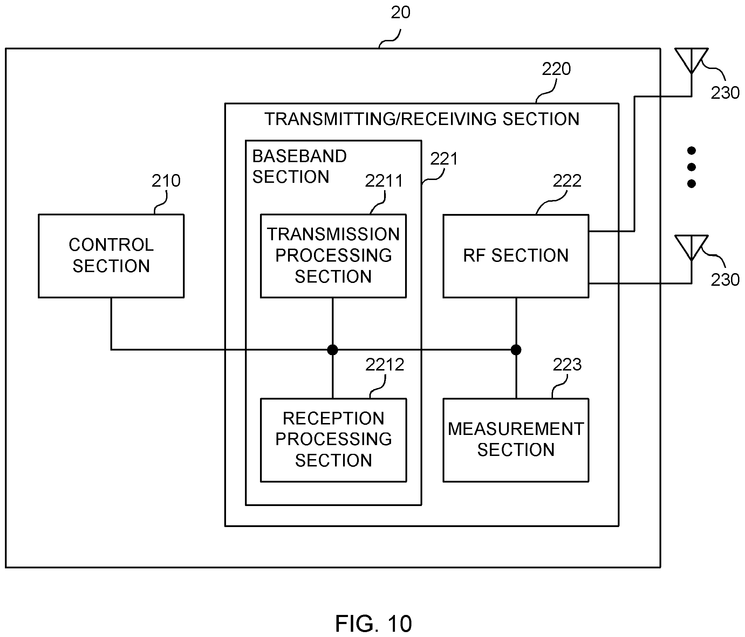

Fig. 10 is a diagram illustrating an example of a configuration of user terminal according to one embodiment. The user terminal 20 includes a control section 210, a transmitting/receiving section 220, and a transmission/reception antenna 230. Note that one or more control sections 210, one or more transmitting/receiving sections 220, and one or more transmission/reception antennas 230 may be provided.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like, which are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a base band circuit, a filter, a phase shifter, a measurement circuit, a transmission/reception circuit, and the like, which are described based on common recognition in the technical field related to the present disclosure.

The transmitting/receiving section 220 may be configured as an integrated transmitting/receiving section, or may include a transmission section and a reception section. The transmission section may include the transmission processing section 2211 and the RF section 222. The reception section may include the reception processing section 2212, the RF section 222, and the measurement section 223.

The transmission/reception antenna 230 can include an antenna, which is described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, or the like acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a base band signal.

Note that whether or not to apply DFT processing may be determined based on configuration of transform precoding. When transform precoding is enabled for a channel (for example, PUSCH), the transmitting/receiving section 220 (transmission processing section 2211) may perform DFT processing as the above-described transmission processing in order to transmit the channel by using a DFT-s-OFDM waveform, and if not, the DFT processing does not have to be performed as the transmission processing.

The transmitting/receiving section 220 (RF section 222) may perform modulation to a radio frequency band, filtering processing, amplification, and the like on the base band signal, and may transmit a signal in the radio frequency band via the transmission/reception antenna 230.

Meanwhile, the transmitting/receiving section 220 (RF section 222) may perform amplification, filtering processing, demodulation to a base band signal, and the like on the signal in the radio frequency band received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired base band signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmitting/receiving section 220 and the transmission/reception antenna 230.

The transmitting/receiving section 220 receives information regarding one or multi configured grant configuration (for example, ConfiguredGrantConfig). The information regarding each configured grant configuration may include information such as the number of repeats (repeat factor K), redundancy version, and transmission occasion.

When a multi configured grant configuration is configured, the control section 210 may determine the configured grant configuration to be applied based on the number of repeats and the redundancy version corresponding to each configured grant configuration.

The control section 210 may perform control so as not to simultaneously perform UL transmission using different configured grant configurations.

The control section 210 may select the configured grant configuration that has the maximum number of UL transmissions.

The control section 210 may determine the start timing of the repeated transmission based on the type of the redundancy version.

The control section 210 may determine the start timing of the repeated transmission based on whether an identical predetermined parameter value corresponds to each configured grant configuration.

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a wireless manner, or the like, for example) and using these apparatuses. The functional blocks may be implemented by combining software with the above-described single apparatus or the above-described plurality of apparatuses.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmission section (transmitting unit),
a transmitter, and the like. In any case, as described above, the implementation method is not particularly limited.

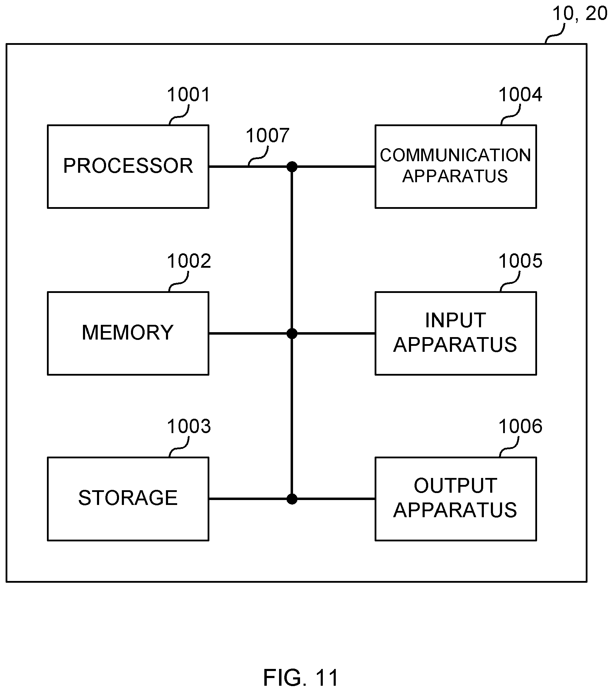

For example, the base station, the user terminal, or the like according to one embodiment of the present disclosure may function as a computer that executes the processing of the radio communication method in the present disclosure. Fig. 11 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may include one or more of each of the apparatuses illustrated in the drawings, or does not have to include some apparatuses.

For example, although only one processor 1001 is shown, a plurality of processors may be provided. Further, the processing may be executed by one processor, or the processing may be executed by two or more processors simultaneously or sequentially, or by using other methods. Note that the processor 1001 may be implemented with one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading or writing of data from or in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 or the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and that operates on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store a program (program code), a software module, and the like, which are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disc, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented in a physically or logically separated manner by the transmission section 120a (220a) and the reception section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be interchangeable. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, and the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted using the mini slot may be referred to as "PDSCH (PUSCH) mapping type B".

A radio frame, a subframe, a slot, a mini slot and a symbol all represent the time unit in signal communication. The radio frame, the subframe, the slot, the mini slot, and the symbol may be called by other applicable names, respectively. Note that time units such as the frame, the subframe, the slot, the mini slot, and the symbol in the present disclosure may be interchangeable.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe".

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be the transmission time unit of channel-encoded data packets (transport blocks), code blocks, codewords, or the like, or may be the unit of processing in scheduling, link adaptation, or the like. Note that when the TTI is given, a time interval (for example, the number of symbols) in which the transport block, the code block, the codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may also be referred to as a usual TTI (TTI in 3GPP Rel. 8 to 12), a normal TTI, a long TTI, a usual subframe, a normal subframe, a long subframe, a slot, or the like. A TTI shorter than the usual TTI may be referred to as a shortened TTI, a short TTI, a partial TTI (or fractional TTI), a shortened subframe, a short subframe, a mini slot, a sub-slot, a slot, or the like.

Note that a long TTI (for example, a usual TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on the numerology.

Also, an RB may include one or more symbols in the time domain, and may be one slot, one mini slot, one subframe or one TTI in length. One TTI, one subframe, and the like each may include one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a certain BWP and be numbered within the BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a predetermined signal/channel outside the active BWP. Note that "cell", "carrier", and the like in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, information, a parameter, or the like described in the present disclosure may be represented in absolute values, represented in relative values with respect to predetermined values, or represented by using other corresponding information. For example, a radio resource may be specified by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers or a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and the like that are input may be transmitted to other pieces of apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, a MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a predetermined value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and the like.

Also, software, instructions, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology or the wireless technology is included within the definition of a transmission medium.

The terms "system" and "network" used in the present disclosure can be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station or a base station subsystem that performs a communication service in this coverage.

In the present disclosure, the terms such as mobile station (MS)", "user terminal", "user equipment (UE)", and "terminal" can be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, the uplink channel, the downlink channel, and the like may be replaced with a side channel.

Likewise, the user terminals in the present disclosure may be interpreted as base stations. In this case, the base stations 10 may have the functions of the user terminals 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), future radio access (FRA), new radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. In this way, reference to the first and second elements does not imply that only two elements may be employed, or that the first element must precede the second element in some way.

The term "determining" as used in the present disclosure may include a wide variety of operations. For example, "determining" may be regarded as judging, calculating, computing, processing, deriving, investigating, looking up, search, inquiry (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Furthermore, "determining" may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy and the like having wavelengths in the radio frequency domain, microwave, and optical (both visible and invisible) domains.

In the present disclosure, the phrase "A and B are different" may mean "A and B are different from each other". Note that the phrase may mean that "A and B are different from C". Terms such as "leave", "coupled", or the like may also be interpreted in the same manner as "different".

In a case where terms such as "include", "including", or a variation of these are used in the present disclosure, these terms are intended to be inclusive similarly to a case where "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure.

The invention according to the present disclosure can be embodied with various corrections and in various modified aspects, without departing from the spirit and scope of the invention defined on the basis of the description of claims. Thus, the description of the present disclosure is for the purpose of explaining examples and does not bring any limiting meaning to the invention according to the present disclosure.

## Claims

1. A terminal comprising:
a reception section that receives information regarding a configured grant configuration; and
a control section that, when a multi configured grant configuration is configured, determines a configured grant configuration to be applied based on the number of repeats and a redundancy version corresponding to each configured grant configuration.

2. The terminal according to claim 1, wherein the control section performs control so as not to simultaneously perform UL transmission using different configured grant configurations.

3. The terminal according to claim 1 or 2, wherein the control section selects a configured grant configuration that has the maximum number of UL transmissions.

4. The terminal according to any one of claims 1 to 3, wherein the control section determines the start timing of repeated transmission based on a type of the redundancy version.

5. The terminal according to any one of claims 1 to 3, wherein the control section determines a start timing of repeated transmission based on whether an identical predetermined parameter value corresponds to each configured grant configuration.

6. A radio communication method comprising:
a step of receiving information regarding a configured grant configuration; and
a step of, when a multi configured grant configuration is configured, determining a configured grant configuration to be applied based on the number of repeats and a redundancy version corresponding to each configured grant configuration.
